# EUROPÄISCHE PATENTSCHRIFT

(11) **EP 3 631 214 B1**
(45) Veröffentlichungstag und Bekanntmachung des Hinweises auf die Patenterteilung: **18.02.2026**
(21) Anmeldenummer: 18728127.4
(22) Anmeldetag: 29.05.2018
(51) Int. Cl.: F16B 4/00, F16B 5/01, F16B 5/02, F16B 11/00, F16B 39/22

(54) **KRAFTÜBERTRAGUNGSANORDNUNG UND INSERT**
FORCE TRANSMISSION ASSEMBLY AND INSERT
DISPOSITIF DE TRANSMISSION DE PUISSANCE ET INSERT

(30) Priorität: 01.06.2017 DE 102017112174
(43) Veröffentlichungstag der Anmeldung: 08.04.2020
(73) Patentinhaber: Acutronic Schweiz AG, 8608 Bubikon (CH)
(72) Erfinder: RELEA, Eduard, 8005 Zürich (CH); WEISS, Lukas, 4054 Basel (CH); KUSSMAUL, Ralph, 5417 Untersiggenthal (CH)
(74) Vertreter: Winter, Brandl - Partnerschaft mbB
(86) Internationale Anmeldenummer: PCT/EP2018/064044
(87) Internationale Veröffentlichungsnummer: WO 2018/219934

(56) Entgegenhaltungen:
- DE-A1- 2 813 098
- US-A- 4 981 735
- US-A- 5 093 957
- US-B1- 6 488 460

## Beschreibung

Die Erfindung betrifft ein Insert gemäß dem Oberbegriff des Patentanspruches 1 und eine Kraftübertragungsanordnung, in das ein derartiges Insert eingesetzt ist.

Insbesondere in der Automobil- und Luftfahrtindustrie besteht schon seit einigen Jahren die Forderung, herkömmliche Bauelemente aus Stahl oder Aluminium durch Leichtbauteile zu ersetzen und so das Gesamtgewicht des Fahrzeugs/Flugzeugs oder auch das Gesamtgewicht sonstiger Maschinenkonstruktionen zu verringern. Dabei finden häufig CFK (Carbonfaser verstärkter Kunststoff)-Sandwichbauteile Anwendung, die einen leichten Kern, beispielsweise aus einem geschäumten Material oder aus einer Wabenstruktur aufweisen, der beidseitig Deckschichten aus CFK-Material oder einem sonstigen steifen Material trägt. Der Kern bewirkt eine Distanzierung der beiden Deckschichten gegenüber der neutralen Faser des Bauteils, um eine höhere Biegesteifigkeit zu erzielen. Problematisch dabei ist die mechanische Ankopplung dieser Leichtbauelemente an die benachbarten Bauteile, um die jeweils anliegenden Kräfte in die Sandwichstruktur einzuleiten. Diese Einleitung von Kräften in die CFK-Sandwichstruktur erfolgt, wie beispielsweise in der US 8,777,193 B2 beschrieben, über ein Insert, das in die Sandwichstruktur eingesetzt wird und dem ein Befestigungsmittel zur mechanischen Ankopplung an das Anschlussbauteil zugeordnet ist. Der Grund für die Verwendung eines derartigen Inserts liegt in der Heterogenität des Compositematerials. Die für die Festigkeit und Steifigkeit des Bauteils maßgeblichen Fasern sind nur in Kombination mit dem jeweiligen Matrixwerkstoff, zum Beispiel Epoxydharz, einsetzbar. Dieser Matrixwerkstoff selbst fällt in Steifigkeit und Festigkeit gegenüber den Fasern stark ab. Durch das Insert wird sichergestellt, dass die Kräfte in das Compositematerial eingeleitet werden, so dass dieses Interface keine Schwachstelle darstellt. Üblicher Weise wird die Krafteinleitung unter dem Gesichtspunkt der Festigkeit betrachtet. Dabei gibt es eine Vielzahl von Vorschlägen, wie derartige Inserts zur Krafteinleitung zu gestalten sind, um eine möglichst hohe Festigkeit zu erreichen, die bei vielen CFK-Anwendungen, wie beispielsweise im Flugzeug- und Fahrzeugbau oder bei Sportgeräten eine große Rolle spielen. Die Steifigkeit ist dabei eine weitere Anforderung, die jedoch von untergeordneter Bedeutung ist.

Bei einer Festigkeitsoptimierung des Sandwichaufbaus steht die maximal erreichbare Spannung im Vordergrund, bei deren Überschreiten ein Bruch, üblicherweise ein Sprödbruch am Punkt der höchsten Spannung erfolgt. Eine festigkeitsoptimierte Auslegung orientiert sich somit bei einem Spannungs-Dehnungs-Diagramm des jeweiligen Werkstoffes/Bauteils an der maximal erreichbaren Spannung und der damit einhergehenden Dehnung. Eine steifigkeitsoptimierte Auslegung hat ein maximales Elastizitätsmodul im Auge, das in dem Spannungs-Dehnungs-Diagramm der Steigung der Tangente im Nullpunkt des Spannungsverlaufes entspricht. Die Krafteinleitung sollte derart erfolgen, dass sowohl die Steifigkeit als auch die Festigkeit in einem vorbestimmten Bereich gewährleistet ist.

Das im Hinblick auf den Leichtbau ausgewählte Kernmaterial kann gut an die jeweilige Formvorgabe angepasst werden, wobei dies entweder durch handwerkliche Arbeit (Shapen) oder durch Fräsen relativ kostengünstig erfolgen kann. Es gibt eine Vielzahl von Lösungen für dieses Kernmaterial und dessen Verarbeitung. All diesen Verfahren gemeinsam ist es, dass die Dicke des Kernmaterials einer gewissen Unsicherheit unterliegt, die im Bereich von 0.1 mm bis mehreren Millimetern liegt. Bei der genannten Krafteinleitung in eine Sandwichkonstruktion muss diese Dickentoleranz des Kerns und damit des gesamten Sandwichaufbaus berücksichtigt werden.

Eine weitere Eigenheit von Kernmaterialien ist, dass sie nicht auf hohe punktuelle Kräfte ausgelegt sind, da die Deckschichten die Kräfte für den Kern auf größerer Flächen bzw. Volumina verteilen.

Aus der DE 17 50 818 A ist ein Befestigungselement für Sandwichstrukturen bekannt. Das Befestigungselement, bestehend aus einer Blindnietmutter mit einem Innengewinde und einem Außengewinde sowie einer Kunststoffschraube mit einem Innengewinde, das mit dem Außengewinde der Blindnietmutter in Eingriff steht, ist in die Sandwichstruktur eingesetzt. Sowohl die Kunststoffschraube, als auch die Blindnietmutter sind mit flanschartigen Anlagen ausgeführt, die an Deckschichten der Sandwichstruktur anliegen um die Kräfte einer anliegenden Last für den Kern auf größere Flächen bzw. Volumina zu verteilen. Eine weitere Schraube, die einen Haken zur Aufnahme der Last aufweist, ist in das Innengewinde der Blindnietmutter eingebracht.

Die US 2006 / 0 182 513 A1 zeigt eine Befestigungsvorrichtung für die Möbelmontage, bestehend aus einer Aufnahmemutter und einer Reduzierschrauben, wobei die Reduzierschraube eine durchgehende Bohrung mit einem Innengewinde aufweist. Dieses Innengewinde nimmt eine von Seiten der Aufnahmemutter eingeführte Schraube auf, die ein an die Befestigungsvorrichtung angrenzendes Bauteil fixiert.

Aus der US 6 736 577 B2 ist eine zylindrische Aufnahme in Form einer Hülse für einen Passstift zur schnellen Montage und Demontage eines Baby-Reisebettes an Zwischenwänden in Passagierflugzeugen bekannt.

Die WO 82/ 02821 A1 zeigt eine Lageranordnung für ein Aufbewahrungsfach, wobei ein Achsbolzen ein Lagerfach und einen Arm miteinander über diese Lageranordnung verbindet.

Die Druckschrift DE 2 81 30 98 A1 einen an einer Platte eingesetzten, zweiteiligen Insert mit zueinander verschieblichen Buchsenabschnitten, die mittels einer Vergussmasse relativ zueinander und mit Bezug zur Platte lagefixiert sind.

Die Druckschrift US 5 09 39 57 A zeigt einen Sandwichaufbau mit Insert. Auch dessen Buchsenabschnitte sind gegeneinander verschieblich verbunden und über eine Vergussmasse relativ zueinander und mit Bezug zum Sandwichaufbau lagefixiert.

Die Druckschrift US 6 48 84 60 B1 zeigt einen Sandwichaufbau mit einem Insert, dessen Buchsenabschnitte miteinander auf Anschlag verschraubt sind. Somit ist der Abstand von Flanschen der Buchsenabschnitte, die in Anlage mit Oberflächen des Sandwichaufbaus sind, festgelegt.

Die Druckschrift US 4 98 17 35 A zeigt einen Sandwichaufbau mit einem Insert, dessen Buchsenabschnitte miteinander verschraubt sind. Die axiale Lage der Buchsenabschnitte zueinander ist über eine Verklebung von Flanschen der Buchsenabschnitte mit den Oberflächen des Sandwichaufbaus fixiert.

Eine klassische Form der Einleitung von Kräften aus einem rotierenden oder zylindrischen Bauteil, beispielsweise einer Welle oder einem Rohr in den Sandwichaufbau ist ein Flansch, der einerseits mit der Welle/dem Rohr und andererseits mit dem Leichtbauteil verbunden ist. Diese Verbindung erfolgt üblicherweise so, dass der Flansch beide Deckschichten verbindet. Ein Nachteil eines derartigen Flansches ist, dass er auf die Dicke des Sandwichs und auf den Durchmesser des Interfaces spezifisch ausgelegt werden muss. Dadurch entsteht eine Vielzahl von Größen und Bauweisen, die der jeweiligen Situation angepasst sind und die mit einem entsprechend hohen vorrichtungstechnischen und hohen kostentechnischen Aufwand einhergehen.

Bei der aus der oben genannten US 8,777,193 B2 bekannten Lösung hat der Insert zwei Flanschbuchsen, die jeweils einen Stützflansch und einen Buchsenabschnitt aufweisen. Die Stützflansche liegen beidseitig an den Deckschichten an und die beiden Buchsenabschnitte werden in eine Ausnehmung des Sandwichaufbaus eingesetzt und verklebt. Das Anschlussbauteil bzw. das Befestigungsmittel zur Ankopplung des Anschlussbauteils wird dann in geeigneter Weise an diesen Flanschbuchsen festgelegt. Auch diese Konstruktion zeigt die vorgenannten Nachteile, da die jeweiligen Flanschbuchsen individuell an die vorliegende Dicke der Sandwichkonstruktion angepasst werden müssen und auch nur wenig Spielraum zur Variation der Befestigungsmittel zur Anbindung der Anschlussbauteile vorhanden ist.

Demgegenüber liegt der Erfindung die Aufgabe zugrunde, ein Insert und eine Kraftübertragungsanordnung zu schaffen, die bei minimalem vorrichtungstechnischem Aufwand eine optimierte Krafteinleitung/Kraftübertragung ermöglichen.

Diese Aufgabe wird im Hinblick auf das Insert durch die Merkmalskombination des Patentanspruchs 1 und im Hinblick auf die Kraftübertragungsanordnung auf die Merkmale des nebengeordneten Patentanspruches 3 gelöst.

Vorteilhafte Weiterbildungen der Erfindung sind Gegenstand der Unteransprüche.

Das erfindungsgemäße Insert hat dementsprechend zwei Flanschbuchsen, die von einem Befestigungsmittel durchsetzt sind und die verstellbar mit einander verbunden sind. Das Insert ist vorzugsweise mit einer Einrichtung zum Verspannen der Verbindung der beiden Flanschbuchsen ausgeführt. Bei dem erfindungsgemäßen Insert ist an einer der Flanschbuchsen ein nabenförmiger Anlagevorsprung ausgebildet ist, an dessen Stirnfläche eine Radialstrebe, die ein Abschnitt des Anschlussbauteils ist und das Insert mit einem an einem separaten Bauelement befestigten Flansch befestigt, flächig anliegt.

Weitere Details des Inserts sind entsprechend der nachfolgenden Beschreibung der Kraftübertragungsanordnung ausgebildet und können jederzeit als Unteransprüche hinzugefügt werden.

Die erfindungsgemäße Kraftübertragungsanordnung hat einen Sandwichaufbau mit einem leichten Kern und steifen Deckschichten, in den zumindest ein Insert eingesetzt ist, über das ein Kraftschluss zu einem Anschlussbauteil erfolgt. Dabei hat jedes Insert zwei Flanschbuchsen, die mit Stützflanschen beidseitig an den Deckschichten anliegen und mit Buchsenabschnitten in den Kern eingesetzt sind. Des Weiteren ist ein Befestigungsmittel vorgesehen, das an zumindest an einer der Flanschbuchsen gehalten ist und welches das Anschlussbauteil trägt. Die Flanschbuchsen sind verstellbar mit einander verbunden.

Eine derartige Ausführung erlaubt es, die Flanschbuchsen individuell im Hinblick auf die Wandstärke und Geometrie des Sandwichaufbaus zu verstellen und dann in geeigneter Weise festzulegen, so dass ein Insert für eine Vielzahl unterschiedlicher Anwendungen verwendbar ist.

Die Verstellbarkeit ermöglicht es auch, das Insert im Gebrauch, beispielsweise bei einem gewissen Verschleiß oder einer Geometrieänderung des Sandwichaufbaus oder des Anschlussbauteils nachzujustieren, dabei wird jedoch vorzugsweise auf eine Verklebung verzichtet oder diese entfernt.

Die Kraftübertragung ist erfindungsgemäß weiter optimiert, da das Insert nach der Montage verspannt ist.

Bei einer möglichen Ausgestaltung stehen die Buchsenabschnitte miteinander in Gewindeeingriff. Dabei ist das Gewinde vorzugsweise ein Feingewinde, so dass die Relativposition der Flanschbuchsen exakt an die jeweilige Dicke des Sandwichaufbaus anpassbar ist. Unter einem Feingewinde wird ein Gewinde verstanden, das eine geringere Steigung als ein herkömmliches metrisches Gewinde aufweist.

Bei einem Ausführungsbeispiel der Erfindung ist an einem Buchsenabschnitt eine Gewindespindel oder Gewindestange ausgebildet, die in Gewindeeingriff mit einem Innengewinde des anderen Buchsenabschnittes bringbar ist.

Die Kraftübertragung ist weiter optimiert, wenn die Flanschbuchsen des Inserts nach der Montage mit einander verspannt sind.

Eine derartige Verspannung kann beispielsweise über das Befestigungsmittel oder eine zusätzliche Spannschraube erfolgen, welche die beiden Flanschbuchsen mit einander verspannt.

Durch diese Verspannung ist gewährleistet, dass abgesehen von den äußeren Lasten/Kräften keine oder nur geringe Kräfte in das Sandwich eingeleitet werden.

Wie eingangs erläutert, ist die Fertigung eines Sandwichaufbaus mit geringer Toleranz relativ schwierig, so dass es vorkommen kann, dass sich die Sandwichgeometrie etwas von der Geometrie des Anschlussbauteils unterscheidet. In diesem Fall kann es vorteilhaft sein, die Anbindung des Befestigungsmittels an das Anschlussbauteil zum Kompensieren dieser Formabweichungen nachgiebig zu gestalten. Dies kann beispielsweise über elastische Lager oder dergleichen erfolgen.

Das Insert kann mit einer Passung im Sandwichaufbau aufgenommen werden. Alternativ kann das Insert, insbesondere dessen Flanschbuchsen nach der Einstellung und Verspannung auch mit dem Sandwichaufbau verklebt werden.

Zur Kompensation der oben erläuterten Geometrieabweichungen kann die Passung oder die Verklebung so gewählt werden, dass eine gewisse Nachgiebigkeit und damit ein gewisser Toleranzausgleich zugelassen wird. Auf diese Weise können Spannungsspitzen abgebaut werden, die auf die einzelnen Inserts wirken.

Bei der Einleitung großer Kräfte wird vorzugsweise eine Vielzahl von Inserts im Sandwichaufbau angeordnet. Das Anschlussbauteil hat dann ein entsprechendes Lochmuster zur Verbindung mit den Inserts.

Bei einem Ausführungsbeispiel der Erfindung ist an zumindest einem Stützflansch des Inserts anschlussseitig ein nabenförmiger Anlagevorsprung für das Anschlussbauteil ausgeführt.

Zur Optimierung der Festigkeit und des Gewichtes kann der Stützflansch zu seinem Umfangrand hin verjüngt sein. Zusätzlich oder alternativ kann der Stützflansch eine Stützfläche mit kreisförmigem oder ovalem Außenumfang aufweisen. Die Stützfläche kann auch beispielsweise als Kreisflächensegment ausgebildet werden, wobei ein Kreisabschnitt weggelassen wird, um den Durchmesser nach innen oder außen zu reduzieren. Vorteilhaft kann es auch sein, wenn die eine Seite kreisrund ist, und die andere Seite eine andere Form hat. Damit kann z. B. der Flansch auf einer Seite der Kupplungsanordnung größer sein, ohne zu kollidieren. Es genügt, auf der Seite mit kreisrunden Flächen anziehen zu können, auf der anderen Seite kann die Stützfläche frei gewählt und optimiert werden.

Zur Gewährleistung einer optimalen Klebefläche können an eine Anlagefläche des Stützflansches Nuten oder Erhöhungen ausgeführt sein.

Die Anmelderin behält sich vor, noch weitere Aspekte zum Gegenstand von abhängigen oder unabhängigen Ansprüchen zu machen.

So wird es bevorzugt, wenn das Insert im Hinblick auf die Steifigkeit ausgelegt ist. Vorzugsweise wird rostfreier Stahl verwendet, um eine einwandfreie und dauerhafte Klebung zu gewährleisten und um die Kräfte im gesamten Bereich der Klebung möglichst gleichmäßig einzuleiten. Für die Anschlusskonstruktion (Anschlussbauteil) kann auch ein anderes Material, beispielsweise Aluminium verwendet werden. Diese Wahlfreiheit offenbart einen weiteren Vorteil der erfindungsgemäßen Lösung. Bei einer direkten Anbindung des Sandwichaufbaus an einen Flansch muss für die Krafteinleitung und die Anschlusskonstruktion das gleiche Material verwendet werden, typischer Weise Aluminium oder Stahl, wobei bei Aluminium die Steifigkeit und Dauerfestigkeit unbefriedigend sind und bei Stahl die hohe Dichte die Leichtbaumöglichkeiten beschränkt. Dieser Nachteil besteht bei der oben genannten Lösung nicht, da das Material des Inserts und des Anschlussbauteils bzw. der Anschlusskonstruktion individuell nach der jeweiligen Aufgabenstellung ausgewählt werden kann.

Die erfindungsgemäßen Inserts werden vorzugsweise als kostengünstige Drehteile ausgelegt und hergestellt.

Die Krafteinleitung ist durch die Variation der Anzahl der Inserts skalierbar.

Wie vorstehend erwähnt, kann die Anbindung der Inserts an die Anschlusskonstruktion unter Umständen gezielte Nachgiebigkeiten in einem oder in mehreren Freiheitsgraden beinhalten, um Spannungsüberhöhungen bei den einzelnen Inserts in Folge mechanischer oder montagetechnischer Mängel zu verhindern / zu minimieren.

Ein weiterer Vorteil der erfindungsgemäßen Konstruktion besteht darin, dass die Auslegung der Anschlusskonstruktion standardisiert und vereinfacht wird und Kosten für die Entwicklung und Realisierung entsprechend geringer ausfallen.

Vorteilhafte Ausführungsbeispiele der Erfindung werden im Folgenden anhand schematischer Zeichnungen näher erläutert. Es zeigen:
Figur 1 ein Ausführungsbeispiel einer erfindungsgemäßen Kraftübertragungsanordnung;
Figur 2 einen Sandwichaufbau der Kraftübertragungsanordnung gemäß Figur 1 mit eingesetzten Inserts;
Figuren 3, 4 Ansichten eines Inserts der Kraftübertragungsanordnung gemäß den Figuren 1 und 2 und
Figuren 5, 6 Varianten der geometrischen Ausgestaltung des Inserts gemäß den Figuren 3 und 4.

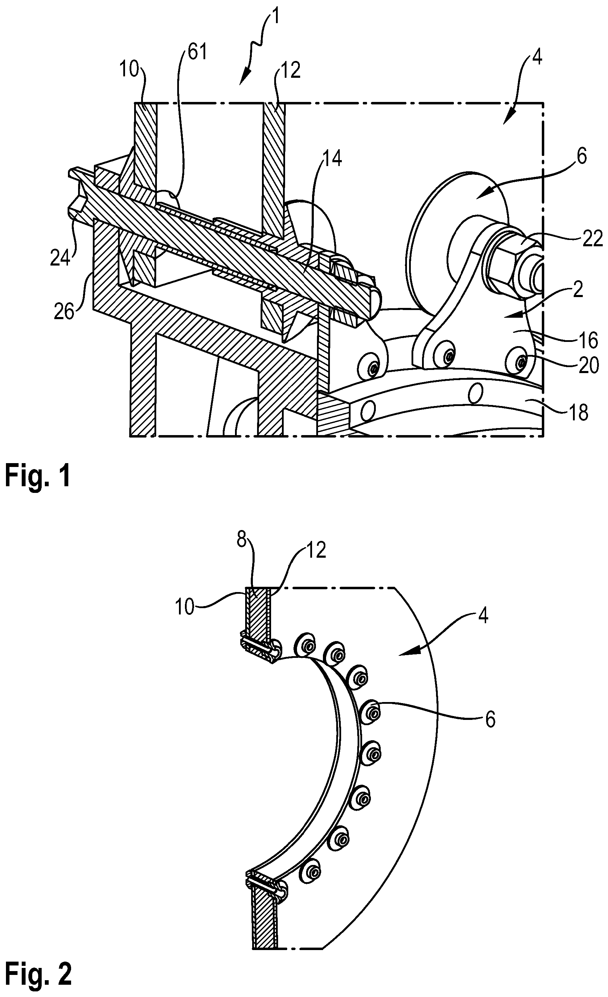

Eine in Figur 1 dargestellte Kraftübertragungsanordnung 1 dient zur Krafteinleitung-/übertragung zwischen einem etwa zylindrischen Bauelement, beispielsweise einer Welle oder einem Rohr (nicht dargestellt) über eine Anschlussbauteilgruppe 2, im vorliegenden Fall einen Flansch auf einem Sandwichaufbau 4, wobei die Kraftübertragung vom bzw. in den Sandwichaufbau 4 über eine Vielzahl von Inserts 6 erfolgt. Figur 2 zeigt eine Einzeldarstellung des Sandwichaufbaus 4 mit den Inserts 6.

Der Sandwichaufbau 4 ist beispielsweise aus einem CFK-Sandwich mit einem geschäumten Kern 8 und zwei CFK-Deckschichten 10, 12 ausgebildet. Wie erläutert, kann anstelle des geschäumten Kerns 8 auch eine Wabenstruktur (Honeycomb) verwendet werden. Selbstverständlich kann der Sandwichaufbau auch mit weiteren Schichten ausgeführt sein. Die im Folgenden noch näher erläuterten Inserts 6 durchsetzen den Schichtaufbau und liegen beidseitig an den beiden Deckschichten 10, 12 an. Den Inserts sind Befestigungsmittel, im vorliegenden Fall jeweils eine Befestigungsschraube 14 zugeordnet, über die zum einen eine Verspannung des Inserts 6 erfolgt und zum anderen die Anschlussbauteilgruppe 2 kraftschlüssig mit dem Insert 6 bzw. dem Sandwichaufbau 4 verbunden ist.

Beim dargestellten Ausführungsbeispiel hat die Anschlussbauteilgruppe 2 eine Vielzahl von Radialstreben 16, die einerseits mit dem jeweiligen Insert 6 und andererseits mit einem Flansch 18 verbunden sind, der seinerseits an dem zugeordneten Bauelement, beispielsweise der Welle oder dem Rohr festgelegt ist. Bei dem beispielhaft dargestellten Ausführungsbeispiel sind die Radialstreben 16 entlang einer verbreiterten Basis über jeweils zwei Schrauben 20 mit dem Flansch 18 verschraubt. An einem gegenüber dieser Basis verjüngten Endabschnitt ist ein Durchbruch ausgebildet, der von der Befestigungsschraube 14 durchsetzt wird. Auf den Endabschnitt der Befestigungsschraube 14 wird dann entsprechend eine Spannmutter 22 oder dergleichen angesetzt. Ein Schraubkopf 24 der Befestigungsschraube 14 liegt an einer rückseitigen Flanschschulter 26 oder einer entsprechend ausgebildeten Radialstrebe (nicht dargestellt) an. Diese Flanschschulter erstreckt sich beim dargestellten Ausführungsbeispiel dann zwischen dem Schraubkopf 24 und dem benachbarten Endabschnitt des Inserts hindurch.

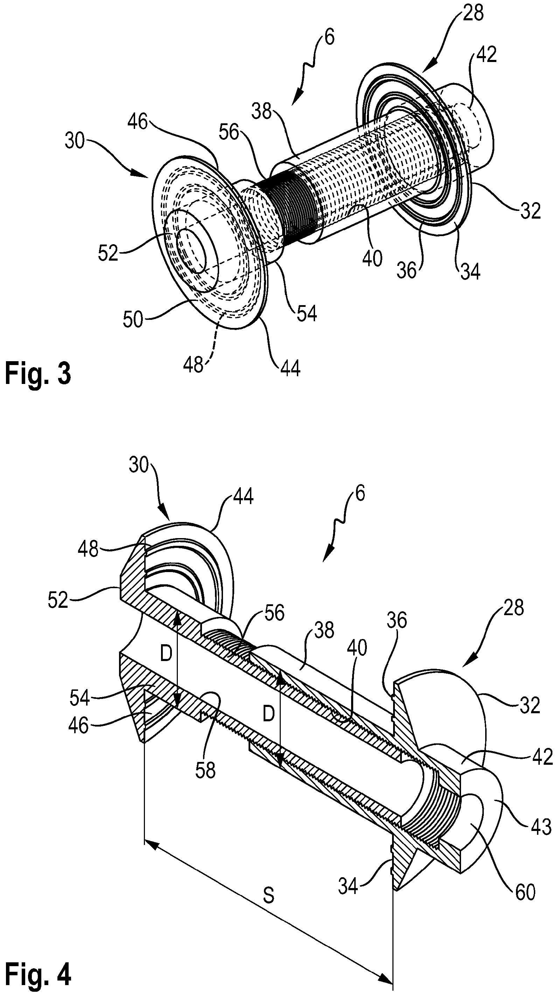

Figur 3 zeigt eine Einzeldarstellung eines Inserts 6 gemäß den Figuren 1 und 2. In Figur 4 ist dieser Insert 6 im Längsschnitt dargestellt. Demgemäß hat das Insert 6 zwei Flanschbuchsen 28, 30, die mit einander in Gewindeeingriff stehen. Die in Figur 3 rechts dargestellte Flanschbuchse 28 hat einen radial auskragenden Stützflansch 32, der mit seiner in Figur 3 zum Betrachter hinweisende ringförmige Stützfläche 34 mit konzentrischen Erhebungen 36 ausgeführt sind, die - wie im Folgenden noch näher ausgeführt - einen gleichmäßigen Kleberauftrag ermöglichen. Die Flanschbuchse 28 hat an ihrem zur anderen Flanschbuchse 30 hinweisenden Endabschnitt einen Buchsenabschnitt 38, an dem ein Innengewinde 40 (siehe Figur 4) ausgebildet ist. Die Axiallänge dieses Buchsenabschnittes 38 ist deutlich geringer als die Dicke des Sandwichaufbaus ausgeführt. Anschlussseitig ist an der Flanschbuchse 28 ein nabenförmiger Anlagevorsprung 42 ausgebildet, an dessen Stirnfläche 43 die vorbeschriebene Radialstrebe 16 flächig anliegt.

Die Flanschbuchse 30 hat ebenfalls einen entsprechend der obigen Ausführungen ausgestalteten Stützflansch 44, an dessen ringförmiger Stützfläche 46 ebenfalls die Erhebungen 48 ausgebildet sind. Die zum Betrachter hinweisende anschlussseitige Außenkontur 50 des Stützflansches 44 ist in etwa pyramidenförmig ausgebildet und endet an einer Abflachung 52, die bei dem in Figur 1 dargestellten Ausführungsbeispiel flächig an der Flanschschulter 26 oder aber auch (nicht dargestellt) am Schraubkopf 24 oder einem sonstigen Anschlussbauteil anliegt.

Zur Flanschbuchse 28 hin ist an der Flanschbuchse 30 ein Buchsenabschnitt 54 ausgebildet, dessen Axiallänge deutlich geringer als diejenige des Buchsenabschnittes 38 ist und der eine Gewindestange 56 trägt, die in das Innengewinde des Buchsenabschnittes 38 einschraubbar ist. Das Gewinde ist dabei als Feingewinde ausgebildet, das eine kleinere Gewindesteigung als übliche metrische Gewinde aufweist. Wie insbesondere dem Schnitt in Figur 4 entnehmbar, sind die Flanschbuchsen 28, 30 jeweils von einer Längsbohrung 58, 60 durchsetzt, die dann bei der Montage ihrerseits von der Befestigungsschraube 14 oder einem sonstigen Befestigungsmittel durchsetzt werden.

Durch Verstellung der Gewindestange 56 kann entsprechend der Dicke des Sandwichaufbaus die Stützbreite S des Inserts 6 oder genauer gesagt der Abstand der Stützflächen 34, 46 verstellt werden.

Wie des Weiteren Figur 4 entnehmbar ist, sind die Durchmesser D der beiden Buchsenabschnitte 38, 54 in etwa gleich groß ausgebildet. Die Axiallänge der Gewindestange 56 und entsprechend auch die Axiallänge des Innengewindes 40 sind so ausgewählt, dass eine Anpassung an unterschiedliche Sandwichdicken auf einfache Weise ermöglicht ist. Der minimale Stützabstand S ist dabei durch die stirnseitige Anlage der beiden Buchsenabschnitte 38, 54 bestimmt, die dann bündig in einander übergehen. Der Durchmesser D des Buchsenabschnitts ist auf Durchmesser B einer Bohrung 61 in dem Sandwichaufbau 4 abgestimmt, so dass durch Passung oder über eine dünne Klebung die Kräfte in die Fasern der Deckschichten eingeleitet werden.

Beim dargestellten Ausführungsbeispiel ist der Umfang der beiden Stützflansche 32, 44 in etwa mit dem gleichen Durchmesser und kreisförmig ausgebildet, so dass beidseitig die gleichen, von der Verdrehposition der Flanschbuchsen 28, 30 unabhängige Krafteinleitungsflächen gebildet sind.

Wie ebenfalls der Figur 4 entnehmbar ist, verjüngen sich beide Stützflansche 32, 44 zu ihrem Außenumfang hin, so dass im Schnitt sich ein etwa trapezförmiger Flanschquerschnitt ergibt.

Beim Zusammenbau der in Figur 1 dargestellten Anschlussbaugruppe 2 werden zunächst gemäß Figur 2 die Inserts 6 in den Sandwichaufbau 4 eingesetzt, wobei die Gewindestange 56 in das Innengewinde 40 eingeschraubt wird bis die Stützflächen 34, 46 in Anlage an die außen liegenden Deckschichten 10, 12 gelangt. Es erfolgt jedoch keine Verspannung über das Feingewinde, um zu vermeiden, dass punktuelle Belastungen in den Sandwichaufbau eingebracht werden. Die Stützflächen 34 sind dabei so gewählt, dass die auftretenden Kräfte großflächig eingeleitet werden können.

Bei einem Ausführungsbeispiel werden die Stützflächen 34, 46 bei der Montage mit einer Klebeschicht versehen, wobei die Mindestdicke der Klebeschicht durch die Erhebungen 36, 48 vorgegeben ist. In diesem Fall erfolgt eine Verklebung des Inserts 6 mit den Deckschichten 10, 12. Alternativ oder zusätzlich kann die Verklebung auch entlang der Buchsenabschnitte 38, 54 erfolgen, so dass dann eine Verklebung im dem Kern 8 vorliegt. Die Verklebung mit den Deckschichten 10, 12 ist vorteilhaft, da dann die Krafteinleitung direkt in die (angeschnittenen) Fasern der Deckschichten 10, 12 erfolgt.

Prinzipiell ist es jedoch auch möglich, die Inserts 6 lediglich mit einer geeigneten Press- oder Spielpassung in der Bohrung 61 aufzunehmen, wobei diese Passung insbesondere im Bereich der Deckschichten 10, 12 wichtig ist, um die Kräfte einleiten zu können.

Dabei kann es durchaus vorteilhaft sein, ein gewisses Spiel oder eine Flexibilität der Kleberanbindung oder der Passung vorzusehen, um Maßabweichungen des Schichtaufbaus mit Bezug zu den Anschlussbauteilen auszugleichen. Zusätzlich oder alternativ kann es dabei auch vorgesehen sein, eine derartige Flexibilität und Nachgiebigkeit im Bereich der Anschlussbauteile vorzusehen.

Bei dem dargestellten Ausführungsbeispiel liegen dann die Inserts 6 auf einem Teilkreis, der dem Teilkreis des Lochmusters der Anschlussbauteilgruppe 2, im vorliegenden Fall des Flansches 18 und/oder dessen Radialstreben 16 entspricht.

Der Sandwichaufbau 4 mit den Inserts 6 wird dann bei dem in Figur 1 dargestellten Ausführungsbeispiel in Axialrichtung auf den Flansch 18 aufgeschoben, bis die Abflachung 52 in Anlage an die Flanschschulter 26 gelangt. Anschließend werden die Befestigungsschrauben 14 eingesetzt, wobei diese - wie beschrieben - einerseits an der Radialschulter 26 anliegen und andererseits die Radialstreben 16 durchsetzen, die beim dargestellten Ausführungsbeispiel nach dem Ansetzen des Sandwichaufbaus 4 am Flansch 18 montiert werden. Auf den auskragenden Endabschnitt der Befestigungsschrauben 14 wird dann jeweils eine Spannmutter 22 angesetzt, über die zum einen eine Verspannung des jeweiligen Inserts 6 erfolgt und zum anderen der Kraftschluss zu den jeweiligen Radialstreben 16 bzw. zum Flansch 18 hergestellt wird.

Da die beiden Flanschbuchsen 28, 30 mit einander in Gewindeeingriff stehen, wird durch diese Verspannung der Inserts 6 keine Kraft auf den Sandwichaufbau aufgebracht. Dies ist wichtig, da sonst insbesondere im Randbereich die Gefahr bestünde, dass der Kern elastisch und/oder plastisch nachgibt - dies ist ein Nachteil herkömmlicher Lösungen.

Wie bereits eingangs erwähnt, werden die Inserts 6 und auch die Befestigungsschrauben 14 vorzugsweise aus rostfreiem Stahl hergestellt, so dass eine einwandfreie und dauerhafte Klebung gewährleistet ist. Die sonstige Anschlusskonstruktion, beispielsweise der Flansch 18 und/oder die Radialstreben 16 können aus einem anderen, im Hinblick auf das Gewicht optimierten Material, beispielsweise aus einer Aluminiumlegierung oder einem sonstigen Leichtmetall hergestellt sein.

Selbstverständlich ist auch eine Verwendung von hochfestem Compositmaterial möglich.

Die Inserts 6 können auf einfache Weise als Drehteile hergestellt werden, so dass eine kostengünstige Lösung gewährleistet ist.

Wie vorstehend erläutert, erfolgt beim dargestellten Ausführungsbeispiel eine Verspannung mittels der Befestigungsschraube 14. Prinzipiell kann jedoch auch vorgesehen werden, diese Verspannung mittels einer Spannschraube durchzuführen, die beispielsweise von einem der Buchsenabschnitte 38, 54 her in den jeweils anderen Buchsenabschnitt eingreift, um diese mit einander zu verspannen. In diesem Fall kann auf eine durchgängige Befestigungsschraube 14 verzichtet werden, so dass dann die Anschlussbauteile über sonstige Befestigungsmittel mit den Stützflanschen 32, 44 verbunden werden können.

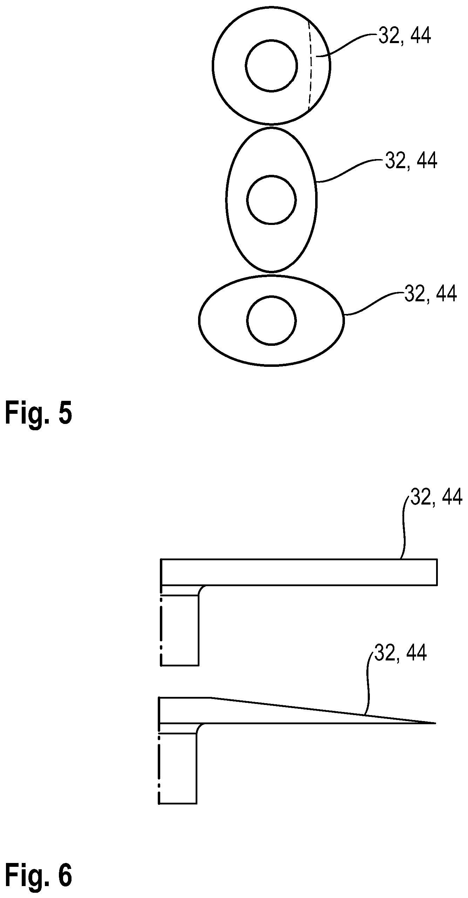

Wie erläutert, sind bei den vorstehend beschriebenen Ausführungsbeispielen die Umfangsflächen der Stützflansche 32, 44 kreisförmig ausgebildet. Ein derartiger Aufbau ist in Figur 5 oben angedeutet. In Abweichung von diesem kreisförmigen Aufbau ist es jedoch auch möglich, wie in Figur 5 unten dargestellt, die Stützflansche 32, 44 elliptisch oder in sonstiger Weise von der kreisförmigen Grundfläche abweichend auszuführen. Dabei wird es bevorzugt, wenn die Stützflansche 32 so ausgebildet sind, dass die jeweiligen Stützflächen gleich groß ausgeführt sind. Wie in Figur 5 gestrichelt angedeutet, kann auch eine kreissegmentförmige Stützfläche verwendet werden. Die Geometrien der Stützflächen 34, 46 der beiden Stützflansche 32, 44 können auch unterschiedlich gewählt werden.

Wie des Weiteren erläutert, sind beim vorbeschriebenen Ausführungsbeispiel die Stützflansche 32, 44 zu ihrem Außenumfang hin verringert - eine derartige Variante ist in Figur 6 unten liegend angeordnet. Selbstverständlich kann diese Verjüngung relativ spitzwinklig, wie in Figur 6 unten dargestellt, oder mit einem relativ stumpfen Winkel, wie in Figur 4 dargestellt, ausgeführt sein. Alternativ kann auch eine gleichbleibende Wandstärke des Stützflansches 32, 44 gewählt werden, wie dies beispielsweise in Figur 6 oben dargestellt ist.

Offenbart sind eine Kraftübertragungsanordnung und ein Insert für eine derartige Kraftübertragungsanordnung, das zwei Flanschbuchsen hat, die verstellbar mit einander verbunden sind und die mit einander verspannt sind.

### Bezugszeichenliste:

- 1: Kraftübertragungsanordnung
- 2: Anschlussbauteilgruppe
- 4: Sandwichaufbau
- 6: Insert
- 8: Kern
- 10: Deckschicht
- 12: Deckschicht
- 14: Befestigungsschraube
- 16: Radialstrebe
- 18: Flansch
- 20: Schraube
- 22: Spannmutter
- 24: Schraubkopf
- 26: Flanschschulter
- 28: Flanschbuchse
- 30: Flanschbuchse
- 32: Stützflansch
- 34: Stützfläche
- 36: Erhebung
- 38: Buchsenabschnitt
- 40: Innengewinde
- 42: Anlagevorsprung
- 43: Stirnfläche
- 44: Stützflansch
- 46: Stützfläche
- 48: Erhebung
- 50: Außenkontur
- 52: Abflachung
- 54: Buchsenabschnitt
- 56: Gewindestange
- 58: Längsbohrung
- 60: Längsbohrung
- 61: Bohrung

## Patentansprüche

1. Insert (6) für eine Kraftübertragungsanordnung (1) mit einem Sandwichaufbau (4), der einen vergleichsweise leichten Kern (8) und zwei steife Deckschichten (10, 12) aufweist, wobei das Insert (6) in den Sandwichaufbau einsetzbar ist, wobei über den Insert (6) ein Kraftschluss zu einem mit einer Kraft beaufschlagbaren Anschlussbauteil ausbildbar ist, mit zwei Flanschbuchsen (28, 30), die mit Stützflanschen (32, 44) beidseitig an den Deckschichten (10, 12) anlegbar und mit Buchsenabschnitten (38, 54) in den Kern (8) einsetzbar sind und denen ein Befestigungsmittel (14) zur Befestigung an dem Anschlussbauteil zuordenbar ist, wobei die Flanschbuchsen (28, 30) verstellbar mit einander verbunden sind, wobei die Buchsenabschnitte (38, 54) in Gewindeeingriff stehen, wobei das Insert (6) verspannbar ist, **dadurch gekennzeichnet, dass** an einer der Flanschbuchsen (28) ein nabenförmiger Anlagevorsprung (42) ausgebildet ist, an dessen Stirnfläche (43) eine Radialstrebe (16), die ein Abschnitt des Anschlussbauteils ist und das Insert (6) mit einem an einem separaten Bauelement befestigten Flansch (18) befestigt, flächig anliegen kann.

2. Insert (6) nach Patentanspruch 2, mit einer Einrichtung zum Verspannen der beiden Flanschbuchsen (28, 30).

3. Kraftübertragungsanordnung (1) mit einem Sandwichaufbau (4), der einen vergleichsweise leichten Kern (8) und zwei steife Deckschichten (10, 12) aufweist, in dem zumindest ein Insert (6) nach Anspruch 1 oder 2 eingesetzt ist, über den ein Kraftschluss zu einem mit einer Kraft beaufschlagten Anschlussbauteil erfolgt, wobei jeder Insert (6) zwei Flanschbuchsen (28, 30) hat, die mit Stützflanschen (32, 44) beidseitig an den Deckschichten (10, 12) anliegen und mit Buchsenabschnitten (38, 54) in den Kern (8) eingesetzt sind und denen ein Befestigungsmittel (14) zur Befestigung an dem Anschlussbauteil zugeordnet ist, wobei die Flanschbuchsen (28, 30) verstellbar mit einander verbunden sind, wobei die Buchsenabschnitte (38, 54) in Gewindeeingriff stehen, **dadurch gekennzeichnet, dass** das Insert (6) verspannt ist und wobei an einer der Flanschbuchsen (28) ein nabenförmiger Anlagevorsprung (42) ausgebildet ist, an dessen Stirnfläche (43) eine Radialstrebe (16), die ein Abschnitt des Anschlussbauteils ist und das Insert (6) mit einem an einem separaten Bauelement befestigten Flansch (18) befestigt, flächig anliegt.

4. Kraftübertragungsanordnung (1) nach Anspruch 3, wobei an einem Buchsenabschnitt (54) eine Gewindestange (56) ausgebildet ist, der ein Innengewinde (40) des anderen Buchsenabschnittes (38) zugeordnet ist.

5. Kraftübertragungsanordnung (1) nach Anspruch 3 oder 4, wobei die Verspannung über das Befestigungsmittel oder eine zusätzliche Spannschraube erfolgt.

6. Kraftübertragungsanordnung (1) nach einem der vorhergehenden Patentansprüche, wobei die Anbindung des Befestigungsmittels an das Anschlussbauteil zum Kompensieren von Formabweichungen des Sandwichaufbaus (4) nachgiebig ausgestaltet ist.

7. Kraftübertragungsanordnung (1) nach einem der vorhergehenden Patentansprüche, wobei das Insert (6) mit einer Passung im Sandwichaufbau (4) aufgenommen ist.

8. Kraftübertragungsanordnung (1) nach einem der Patentansprüche 3 bis 5, wobei die Flanschbuchsen (38, 54) nach Einstellung des Inserts (6) mit dem Sandwichaufbau (4) verklebt sind.

9. Kraftübertragungsanordnung (1) nach Patentanspruch 6 oder 7, wobei die Passung oder die Verklebung so gewählt ist, dass eine gewisse Nachgiebigkeit zugelassen wird.

10. Kraftübertragungsanordnung (1) nach einem der vorhergehenden Patentansprüche, wobei eine Vielzahl von Inserts (6) im Sandwichaufbau (4) angeordnet sind und das Anschlussbauteil ein entsprechendes Lochmuster zum Verbinden mit den Inserts (6) aufweist.

11. Kraftübertragungsanordnung (1) nach einem der vorhergehenden Patentansprüche, wobei zumindest ein Stützflansch (32, 44) zu seinem Umfang hin verjüngt ist und/oder der Stützflansch eine Stützfläche (34, 46) mit kreisförmigem oder einem von der Kreisform abweichenden Außenumfang, beispielsweise ein Kreisflächensegment oder eine Ovalform, hat, wobei eine Stützfläche (34, 46) eines Stützflansches (32, 44) eine andere Geometrie als die Stützfläche (34, 46) des anderen Stützflansches (32, 44) aufweisen kann.

12. Kraftübertragungsanordnung (1) nach einem der vorhergehenden Patentansprüche, wobei an einer Stützfläche (34, 46) des Stützflansches (32, 44) Nuten oder Erhebungen (36) ausgeführt sind.

## Claims

1. An insert (6) for a force transmission assembly (1) with a sandwich configuration (4) comprising a comparatively light core (8) and two rigid cover layers (10, 12), wherein the insert (6) can be inserted into the sandwich configuration (4), wherein a force-fit connection to a force-applied connecting part can be established via the insert (6), with two flange bushings (28, 30) that can be fastened to both sides of the cover layers (10, 12) with support flanges (32, 44) and can be inserted into the core (8) with bushing sections (38, 54) and to which a fastening means (14) for fastening to the connecting part can be assigned, wherein the flange bushings (28, 30) are connected to each other in an adjustable manner, wherein the bushing sections (38, 54) are in threaded engagement, wherein the insert (6) is braceable, **characterized in that** a hub-shaped abutment projection (42) is formed on one of the flange bushings (28), wherein on an end face (43) of the abutment projection (42) a radial bracing (16), which is a section of the connecting part and fastens the insert (6) with a flange (18) fastened to a separate fastening element, can abut in a plane manner.

2. The insert (6) according to claim 2, with a device for bracing the two flange bushings (28, 30).

3. A force transmission assembly (1) with a sandwich structure (4) comprising a comparatively light core (8) and two rigid cover layers (10, 12) into which at least one insert (6) according to claim 1 or 2 is inserted, via which a force-fit connection to a force-applied connecting part is established, wherein each insert (6) has two flange bushings (28, 30) which are supported on both sides on the cover layers (10, 12) at support flanges (32, 44) and are inserted into the core (8) with bushing sections (38, 54) and to which a fastening means (14) for fastening to the connecting part is assigned, wherein the flange bushings (28, 30) are connected to each other in an adjustable manner, wherein the bushing sections (38, 54) are in threaded engagement, **characterized in that** the insert (6) is braced and wherein a hub-shaped abutment projection (42) is formed on one of the flange bushings (28), wherein on the end face (43) of the abutment projection (42) a radial bracing (16), which is a section of the connecting part and fastens the insert (6) to a flange (18) fastened to a separate fastening element, abuts in a plane manner.

4. The force transmission assembly (1) according to claim 3, wherein a threaded rod (56) is formed on one bushing section (54), which is associated with an internal thread (40) of the other bushing section (38).

5. The force transmission arrangement (1) according to claim 3 or 4, wherein the bracing is applied via the fastening means (14) or an additional tensioning screw.

6. The force transmission arrangement (1) according to one of the preceding claims, wherein the connection of the fastening means (14) to the connecting part is designed to be flexible in order to compensate for shape deviations of the sandwich configuration (4).

7. The force transmission arrangement (1) according to one of the preceding claims, wherein the insert (6) is received with a fitting in the sandwich configuration (4).

8. The force transmission arrangement (1) according to one of claims 3 to 5, wherein the flange bushings (38, 54) are adhered to the sandwich configuration (4) after the insert (6) has been adjusted.

9. The force transmission assembly (1) according to claim 7 or 8, wherein the fitting or the adhesion is selected such that a certain degree of flexibility is permissible.

10. The force transmission assembly (1) according to one of the preceding claims, wherein a plurality of inserts (6) is arranged in the sandwich configuration (4) and the connecting part has a corresponding hole pattern for connecting to the inserts (6).

11. The force transmission assembly (1) according to one of the preceding claims, wherein at least one support flange (32, 44) is tapered toward its periphery and/or the support flange (32, 44) has a support surface (34, 46) with a circular or non-circular outer periphery, for example a circular surface segment or an oval shape, wherein the support surface (34, 46) of one support flange (32, 44) may have a different geometry than the support surface (34, 46) of the other support flange (32, 44).

12. The force transmission assembly (1) according to one of the preceding claims, wherein grooves or protrusions (36) are formed on a support surface (34, 46) of the support flange (32, 44).

## Revendications

1. Insert (6) pour un agencement de transmission de force (1) avec une structure en sandwich (4) qui présente un noyau relativement léger (8) et deux couches de recouvrement rigides (10, 12), dans lequel l'insert (6) peut être inséré dans la structure en sandwich, dans lequel une liaison à force peut être formée par l'intermédiaire de l'insert (6) avec une pièce de raccordement pouvant être sollicitée par une force, avec deux douilles à bride (28, 30) qui peuvent être appliquées des deux côtés au niveau des couches de recouvrement (10, 12) avec des brides d'appui (32, 44) et peuvent être insérées dans le noyau (8) avec des sections de douille (38, 54) et auxquelles un moyen de fixation (14) peut être associé pour la fixation à la pièce de raccordement, dans lequel les douilles à bride (28, 30) sont reliées entre elles de manière réglable, dans lequel les sections de douille (38, 54) sont engagées par filetage, dans lequel l'insert (6) peut être serré, **caractérisé en ce qu'**une saillie d'appui en forme de moyeu (42) est formée au niveau d'une des douilles à bride (28) sur la surface frontale (43) de laquelle une entretoise radiale (16), qui est une section de la pièce de raccordement peut s'appuyer à plat, et fixe l'insert (6) à une bride (18) fixée à un élément de construction séparé.

2. Insert (6) selon la revendication 2, avec un appareil pour serrer les deux douilles à bride (28, 30).

3. Agencement de transmission de force (1) avec une structure en sandwich (4) qui présente un noyau relativement léger (8) et deux couches de recouvrement rigides (10, 12), en ce qu'au moins un insert (6) selon la revendication 1 ou 2 est inséré, par l'intermédiaire duquel une liaison à force s'effectue avec une pièce de raccordement pouvant être sollicitée par une force, dans lequel chaque insert (6) présente deux douilles à bride (28, 30), qui sont appliquées des deux côtés au niveau des couches de recouvrement (10, 12) avec des brides d'appui (32, 44) et sont insérées dans le noyau (8) avec des sections de douille (38, 54) et auxquelles un moyen de fixation (14) est associé pour la fixation à la pièce de raccordement, dans lequel les douilles à bride (28, 30) sont reliées entre elles de manière réglable, dans lequel les sections de douille (38, 54) sont engagées par filetage, **caractérisé en ce que** l'insert (6) est serré, et dans lequel une saillie d'appui en forme de moyeu (42) est formée au niveau d'une des douilles à bride (28) sur la surface frontale (43) de laquelle une entretoise radiale (16), qui est une section de la pièce de raccordement, s'appuie à plat et fixe l'insert (6) à une bride (18) fixée à un élément de construction séparé.

4. Agencement de transmission de force (1) selon la revendication 3, dans lequel une tige filetée (56) est formée au niveau d'une section de douille (54) à laquelle un filetage intérieur (40) de l'autre section de douille (38) est associé.

5. Agencement de transmission de force (1) selon la revendication 3 ou 4, dans lequel le serrage s'effectue par l'intermédiaire du moyen de fixation ou par une vis de serrage supplémentaire.

6. Agencement de transmission de force (1) selon l'une quelconque des revendications précédentes, dans lequel la liaison du moyen de fixation à la pièce de raccordement est conçue de manière élastique pour compenser des écarts de forme de la structure en sandwich (4).

7. Agencement de transmission de force (1) selon l'une quelconque des revendications précédentes, dans lequel l'insert (6) est logé dans la structure en sandwich (4) avec un ajustement.

8. Agencement de transmission de force (1) selon l'une quelconque des revendications 3 à 5, dans lequel les douilles à bride (38, 54) sont collées à la structure en sandwich (4) après le réglage de l'insert (6).

9. Agencement de transmission de force (1) selon la revendication 6 ou 7, dans lequel l'ajustement ou le collage est sélectionné de sorte qu'une certaine élasticité soit permise.

10. Agencement de transmission de force (1) selon l'une quelconque des revendications précédentes, dans lequel une pluralité d'inserts (6) sont agencés dans la structure en sandwich (4), et la pièce de raccordement présente un motif à trous correspondant pour la liaison avec les inserts (6).

11. Agencement de transmission de force (1) selon l'une quelconque des revendications précédentes, dans lequel au moins une bride d'appui (32, 44) est effilée vers sa périphérie et/ou la bride d'appui présente une surface d'appui (34, 46) avec un pourtour extérieur circulaire ou divergeant de la forme circulaire, par exemple un segment de surface circulaire ou une forme ovale, dans lequel une surface d'appui (34, 46) d'une bride d'appui (32, 44) peut présenter une autre géométrie que la surface d'appui (34, 46) de l'autre bride d'appui (32, 44).

12. Agencement de transmission de force (1) selon l'une quelconque des revendications précédentes, dans lequel des rainures ou des renflements (36) sont réalisés au niveau d'une surface d'appui (34, 46) de la bride d'appui (32, 44).
